(19) Europäisches Patentamt
European Patent Office
Office européen des brevets

(11) Veröffentlichungsnummer: **0 192 946 B1**

(12) **EUROPÄISCHE PATENTSCHRIFT**

(45) Veröffentlichungstag der Patentschrift: **21.09.88**

(51) Int. Cl.[4]: **C 08 G 18/66**, C 08 G 18/42, C 09 J 3/16, C 08 J 5/12, C 08 G 18/12

(21) Anmeldenummer: **86100602.1**

(22) Anmeldetag: **17.01.86**

(54) **Endständige Hydroxylgruppen aufweisende Polyesterpolyurethane und ihre Verwendung als Klebstoffe oder zur Herstellung von Klebstoffen.**

(30) Priorität: **25.01.85 DE 3502379**

(43) Veröffentlichungstag der Anmeldung: **03.09.86 Patentblatt 86/36**

(45) Bekanntmachung des Hinweises auf die Patenterteilung: **21.09.88 Patentblatt 88/38**

(84) Benannte Vertragsstaaten: **BE DE FR GB IT NL**

(56) Entgegenhaltungen:
**DE-A-1 930 336**
**DE-A-2 626 132**
**DE-A-2 903 703**
**FR-A-1 401 926**
**GB-A-1 191 260**
**US-A-4 051 111**

**C. HEPBURN: "Polyurethane elastomers", 1982, Seiten 40,41, Kapitel 2, Applied Science Publishers, London, GB; "Polyurethane elastomer chemistry"**

(73) Patentinhaber: **BAYER AG, Konzernverwaltung RP Patentabteilung, D-5090 Leverkusen 1 Bayerwerk (DE)**

(72) Erfinder: **Meckel, Walter, Dr., Zonser Strasse 9, D-4040 Neuss (DE)**
Erfinder: **Müller- Albrecht, Horst, Dr., Roggendorfstrasse 59, D-5000 Köln 80 (DE)**
Erfinder: **Dollhausen, Manfred, Dr., Herzogenfeld 21, D-5068 Odenthal (DE)**

**EP 0 192 946 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft neue, weitgehend lineare, endständige Hydroxylgruppen aufweisende Polyesterpolyurethane auf Basis von ausgewählten Ausgangsmaterialien und ihre Verwendung als Klebstoffe bzw. zur Herstellung von Klebstoffen.

Die Verwendung von weitgehend linearen, endständige Hydroxylgruppen aufweisenden Polyesterpolyurethanen als Klebstoffe zum Verkleben der verschiedensten Werkstoffe, wie weichmacherhaltigen PVC-, Natur- und Synthesekautschuktypen mit sich selbst und anderen Materialien ist bekannt und beispielsweise in der DE-PS 1 256 822 oder DE-PS 1 930 336 beschrieben.

Diese, auf Basis kristalliner Dihydroxypolyester eines im allgemeinen zwischen 800 und 4000 liegenden Molekulargewichts, gegebenenfalls niedermolekularen Kettenverlängerungsmitteln und Diisocyanaten aufgebauten Dihydroxypolyesterpolyurethane erfüllen jedoch, trotz breitem Einsatz in der Klebstoffindustrie, noch nicht alle Anforderungen moderner Fügetechnik.

So erfordern modisches Schuhdesign und rationelle Fertigung beispielsweise, daß die auf dem Sohlenmaterial aufgetragene Klebstoffschicht durch einen kurzen Wärmestoß (Schockaktivierung) genügend thermoplastifiziert wird, damit sie sich mit dem nicht aktivierten Klebstoff auf dem Schaftmaterial dauerhaft verbinden läßt. Für eine problemlose Fertigung ist es nun von entscheidender Bedeutung, daß diese Kontaktklebzeit nach der Schockaktivierung für einen ausreichend langen Zeitraum bestehen bleibt. Um dieses Ziel zu erreichen, wurden bereits früher Dihydroxypolyurethane einer hohen Thermoplastizität entwickelt, die eine ausreichende Kontaktklebzeit nach der Schockaktivierung erlauben, aber diese Klebstoffe weisen den gravierenden Nachteil auf, daß wegen mangelnder Anfangsfestigkeit lange Standzeiten in der Presse erforderlich werden, was einer rationellen Serienfertigung entgegensteht.

Es war daher die der Erfindung zugrunde liegende Aufgabe, neue Klebstoffe auf Basis von weitgehend linearen Polyesterpolyurethanen zur Verfügung zu stellen, die die Forderungen der Praxis bezüglich ausreichender Kontaktklebzeit nach der Hitzeschockaktivierung und hoher Anfangs- und Endfestigkeit der Verklebungen weitgehend befriedigen.

Diese Aufgabe konnte durch die Bereitstellung der nachstehend näher beschriebenen erfindungsgemäßen Polyesterpolyurethane bzw. ihrer Verwendung als Klebstoff oder Klebstoffrohstoff erfüllt werden.

Gegenstand der Erfindung sind weitgehend lineare, endständige Hydroxylgruppen aufweisende Polyesterpolyurethane, hergestellt durch Umsetzung von

a) Polyesterdiolen eines über 600 liegenden Molekulargewichts und gegebenenfalls

b) Diolen des Molekulargewichtsbereichs 62 bis 600 als Kettenverlängerungsmittel mit

c) organischen Diisocyanaten

unter Einhaltung eines Äquivalentverhältnisses von Hydroxylgruppen der Komponenten a) und b) zu Isocyanatgruppen der Komponente c) von 1 : 0,9 bis 1 : 0,999, dadurch gekennzeichnet, daß die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4 : 1 bis 1 : 4 besteht.

Gegenstand der Erfindung ist auch die Verwendung dieser Polyesterpolyurethane als Klebstoffe oder zur Herstellung von Klebstoffen zum Verkleben von Kunststoffen mit sich selbst und anderen Substraten.

Ausgangsmaterialien zur Herstellung der erfindungsgemäßen Polyesterpolyurethane sind

a) spezielle Dihydroxypolyester, gegebenenfalls

b) niedermolekulare Diole als Kettenverlängerungsmittel und

c) organische Diisocyanate.

Die erfindungswesentliche Komponente a) besteht zu mindestens 80 Gew.-% aus Polyesterdiolen eines aus der Hydroxylzahl berechenbaren Molekulargewichts von 4000 bis 6000 auf Basis von (i) Adipinsäure und (ii) Gemischen aus 1,4-Dihydroxybutan und 1,6-Dihydrohexan im Molverhältnis der Diole von 4 : 1 bis 1 : 4, vorzugsweise 7 : 3 bis 1 : 2. Die Herstellung dieser Polyesterdiole erfolgt in an sich bekannter Weise durch Umsetzung der Adipinsäure mit einem, dem genannten Molekulargewicht entsprechenden, Überschuß des Diolgemischs bei 100 bis 220° C, bis die Säurezahl des Reaktionsgemisches unter 2 abgefallen ist.

Neben den erfindungsgwesentlichen Polyesterdiolen kann die Komponente a) bis zu 20 Gew.-% an anderen, ein aus der Hydroxylzahl berechenbares Molekulargewicht über 600 aufweisenden Polyesterdiolen enthalten. Im allgemeinen weisen diese, gegebenenfalls mitzuverwendenden Polyesterdiole ein zwischen 1000 und 4000 liegendes Molekulargewicht auf. Es handelt sich bei diesen Polyesterdiolen um solche, wie sie in an sich bekannter Weise durch Umsetzung von Alkandicarbonsäuren mit vorzugsweise mindestens 6 Kohlenstoffatomen und Alkandiolen mit vorzugsweise mindestens 4 Kohlenstoffatomen zugänglich sind. Geeignete Dicarbonsäuren sind beispielsweise Adipinsäure, Pimelinsäure, Korksäure, Azelainsäure oder

Sebacinsäure. Geeignete Diole sind beispielsweise 1,4-Dihydroxybutan, 1,5-Dihydroxypentan oder 1,6-Dihydroxyhexan. Auch Dihydroxypolycarbonate des genannten Molekulargewichtsbereichs, insbesondere auf Basis von 1,6-Dihydroxyhexan, sowie endständige Hydroxylgruppen aufweisende Veresterungsprodukte geradkettiger Hydroxyalkanmonocarbonsäuren mit mindestens 5 Kohlenstoffatomen wie z. B. ε-Hydroxycarbonsäure bzw. die entsprechenden, endständige Hydroxylgruppen aufweisenden Lactonpolymerisate können gegebenenfalls in untergeordneten Mengen in der Komponente a) vorliegen. Vorzugsweise handelt es sich jedoch bei der erfindungswesentlichen Komponente a) ausschließlich um Polyesterdiole der genannten Art auf Basis von Adipinsäure und Gemischen aus 1,4-Dihydroxybutan und 1,6-Dihydroxyhexan.

Bei der Herstellung der erfindungsgemäßen Polyesterpolyurethane können gegebenenfalls als Aufbaukomponente b) die an sich bekannten niedermolekularen, zwei endständige Hydroxylgruppen aufweisenden Kettenverlängerungsmittel mitverwendet werden. Es handelt sich hierbei im allgemeinen um zweiwertige Alkohole des Molekulargewichtsbereichs 62 bis 600, vorzugsweise 62 bis 118.

Vorzugsweise handelt es sich bei diesen Kettenverlängerungsmitteln um endständige Hydroxylgruppen aufweisende Alkandiole mit 2 bis 8, vorzugsweise 2 bis 6 und insbesondere 4 bis 6 Kohlenstoffatomen wie z.B. 1,2-Dihydroxyethan, 1,3-Dihydroxypropan, 1,4-Dihydroxybutan, 1,5-Dihydroxypentan, 1,6-Dihydroxyhexan oder beliebige Gemische derartiger Diole. Außer diesen bevorzugten Kettenverlängerungsmitteln kommen jedoch auch Esterdiole des genannten Molekulargewichtsbereichs wie z. B. Terephthalsäure-bis-2-hydroxyethylester, Etherdiole des genannten Molekulargewichtsbereichs wie z. B. 4,4'-Bis-(2-hydroxyethoxy)-diphenylpropan-2,2 oder auch carboxylgruppenhaltige Diole wie Dimethylolpropionsäure und/oder sulfonatgruppenhaltige Diole wie beispielsweise propoxylierte Addukte von Natriumhydrogensulfit an 1,4-Dihydroxy-but-2-en und/oder quaternäre Ammoniumgruppen enthaltende Diole des genannten Molekulargewichtsbereichs in Betracht. Beispiele für geeignete carboxylgruppenhaltige oder ionisch modifizierte Diole der genannten Art können der DE-OS 2 734 102 entnommen werden.

Die Komponente b) wird, falls überhaupt, in einer Menge von bis zu 200, vorzugsweise bis zu 100 und insbesondere bis zu 70 Hydroxyläquivalentprozent, bezogen auf die Komponente a), mitverwendet. Insbesondere bei Verwendung von Gemischen aus Alkandiolen der genannten Art als Komponente b) können die Kettenverlängerungsmittel insgesamt in einer Menge von 100 bis 200 Hydroxyäquivalentprozent, bezogen auf die Komponente a), mitverwendet werden. Bei Verwendung von nur einem Kettenverlängerungsmittel der beispielhaft genannten Art liegt die Menge der Komponente b) im allgemeinen bei maximal 100 Hydroxyläquivalentprozent, bezogen auf die Komponente a). Besonders bevorzugt ist die Verwendung der Komponente b) in einer Menge von 30 bis 70 Hydroxyläquivalentprozent, bezogen auf die Komponente a).

Bei der Komponente c) handelt es sich um organische Diisocyanate der an sich bekannten Art, insbesondere um solche der Formel

$$Q(NCO)_2$$

in welcher

Q für einen aliphatischen Kohlenwasserstoffrest mit 4 bis 10, vorzugsweise 6 Kohlenstoffatomen, einen cycloaliphatischen Kohlenwasserstoffrest mit 5 bis 15 Kohlenstoffatomen, vorzugsweise 6 bis 13 Kohlenstoffatomen, einen aromatischen Kohlenwasserstoffrest mit 6 bis 15, vorzugsweise 7 bis 13 Kohlenstoffatomen oder einen araliphatischen Kohlenwasserstoffrest mit 8 Kohlenstoffatomen steht.

Beispiele geeigneter Diisocyanate sind 1,6-Diisocyanatohexan, 1,4-Diisocyanatocyclohexan, 1-Isocyanato-3-isocyanatomethyl-3,5,5-trimethyl-cyclohexan, 2,4- und gegebenenfalls 2,6-Diisocyanatotoluol, 4,4'-Diisocyanatodiphenylmethan, 4,4'-Diisocyanato-diphenylpropan-2,2 bzw. beliebige Gemische derartiger Diisocyanate. Besonders bevorzugt wird als Komponente c) 1,6-Diisocyanatohexan oder 4,4'-Diisocyanatodiphenylmethan eingesetzt.

Neben diesen Aufbaukomponenten a) bis c) können bei der Herstellung der erfindungsgemäßen Polyesterpolyurethane gegebenenfalls auch geringe Mengen, d.h. bis zu 5 Äquivalentprozent, bezogen auf die Ausgangskomponenten a) bis c), an verzweigend wirkenden, höherfunktionellen Aufbaukomponententen, z. B. höherfunktionelle Alkohole wie Trimethylolpropan oder höherfunktionelle Polyisocyanate mitverwendet werden, da eine geringe Verzweigung der erfindungsgemäßen Polyesterpolyurethane oft von Vorteil sein kann.

Die Herstellung der erfindungsgemäßen Polyesterpolyurethane erfolgt vorzugsweise im Eintopfverfahren, d.h. durch Umsetzung eines Gemischs der Komponenten a) und b) mit der Isocyanatkomponente c), wobei vorzugsweise in der Schmelze bei 50 bis 200, vorzugsweise 80 bis 150°C, in einem NCO/OH-Molverhältnis von 0,9 : 1 bis 0,999 : 1 gearbeitet wird, so daß stets endständige Hydroxylgruppen aufweisende Verfahrensprodukte entstehen. Die Umsetzung kann selbstverständlich auch in Gegenwart von inerten Lösungsmitteln, wie z. B. Toluol, Methylethylketon, Essigsäureethylester oder Dimethylformamid bzw. in Gegenwart von Gemischen derartiger Lösungsmittel durchgeführt werden.

Die Herstellung kann jedoch auch nach dem Prepolymerprinzip erfolgen, wobei beispielsweise die Polyesterkomponente a) mit der Diisocyanatkomponente c) in eine über 1 : 1 liegenden NCO/OH-Molverhältnis bei 50 bis 150°C zu einem NCO-Prepolymeren umgesetzt wird, welches anschließend mit dem Kettenverlängerungsmittel b) bei 80 bis 200°C kettenverlängert wird. Auch hier kann sowohl bei der Herstellung der Prepolymeren als auch bei der Kettenverlängerungsreaktion in der Schmelze oder in

Gegenwart von Lösungsmitteln gearbeitet werden. Selbstverstandlich sind Varianten denkbar, beispielsweise dergestalt, daß bereits bei der Herstellung des NCO-Prepolymeren ein oder zwei der genannten Dioltypen b) mitverwendet werden, während dann die Kettenverlängerungsreaktion unter Verwendung der restlichen Dioltypen b) erfolgt. Die Reaktionen können diskontinuierlich in Rührkesseln oder kontinuierlich in z. B. Reaktionsextrudern oder über Mischköpfe ausgeführt werden. Die Mitverwendung von Katalysatoren ist selbstverständlich nicht ausgeschlossen.

Die erfindungsgemäßen Produkte stellen wertvolle Klebstoffe bzw. Klebstoffrohstoffe zum Verkleben beliebiger Substrate, insbesondere aber zur Verklebung von Weich-PVC mit sich selbst oder anderen Materialien, dar. Zur erfindungsgemäßen Verwendung werden die erfindungsgemäßen Verfahrensprodukte in Form von Lösungen in geeigneten Lösungsmitteln, beispielsweise der oben bereits beispielhaft genannten Art oder aber als Schmelze, verarbeitet. Bevorzugt werden die erfindungsgemäßen Verfahrensprodukte in Form von 10 bis 40 gew.-%-igen Lösungen in Polaren Lösungsmitteln, beispielsweise Aceton oder Methylethylketon, verwendet. Die Viskosität dieser Klebstofflösungen kann durch Variation des Gehaltes an Hydroxylpolyurethan den speziellen Erfordernissen des Klebeverfahrens oder der zu verklebenden Materialien angepaßt werden. Die Herstellung der erfindungsgemäß zu verwendenden Lösungen der erfindungsgemäßen Hydroxylpolyurethane geschieht vorteilhaft durch einfaches Auflösen der Polyurethane in den zum Einsatz gelangenden polaren Lösungsmitteln bei Raumtemperatur bzw. bei mäßig erhöhter Temperatur. Falls die Herstellung der Hydroxylpolyurethane in Lösung erfolgte, kann das zur Herstellung eventuell verwendete unpolare Lösungsmittel entweder zunächst abgezogen werden, oder es kann auch dem System eine dem jeweiligen Verwendungszweck angepaßte Menge an polarem Lösungsmittel ohne vorheriges Abziehen des unpolaren Lösungsmittels zugegeben werden. Bei Verwendung von polaren Lösungsmitteln während der Herstellung der Polyurethane entstehen direkt verwendbare Lösungen.

Zur Erreichung spezieller Eigenschaften können den beschriebenen Klebstoffen natürliche oder synthetische Harze, wie z. B. Phenolharze, Ketonharze, Colophoniumderivate, Phthalatharze, Acetyl- oder Nitrocellulose oder andere Stoffe, wie z. B. Silikatfüllstoffe, zugefügt werden. Auch der Zusatz von Vernetzungsmitteln, beispielsweise von höherfunktionellen Polyisocyanaten, wie z. B. Phosphorsäure-tris-isocyanatophenylester, Tris(isocyanatohexyl)-isocyanurat oder Tris-(isocyanatohexyl)-biuret, ist möglich, um besonders wärmefeste Klebungen zu erhalten.

Die erfindungsgemäßen Produkte können jedoch auch auf der Schmelze verarbeitet werden. In beiden Fallen werden zur Verarbeitung die als Lösung oder Schmelze vorliegenden Klebstoffe auf die gegebenenfalls gerauhten oder in anderer Weise vorhandelten, zu verklebenden Werkstoffoberflächen gebracht. Dies kann mittels Walze, Pinsel, Spachtel, Spritzpistole oder einer anderen Vorrichtung geschehen. Die Klebstoffaufstriche werden zum weitgehenden Abdampfen der in ihnen enthaltenen Lösungsmittel und zur Aktivierung beispielsweise auf ca. 50 bis 150, vorzugsweise ca. 55 bis 100° C erhitzt.

Die Werkstoffe können anschließend sofort mit Preßdruck gefügt werden, oder wozu - sich die erfindungsgemäßen Klebstoffe besonders gut eignen - nach Zwischenlagerung und einseitiger Schockaktivierung verarbeitet werden.

Es ist auch möglich, auf eine mit einer bereits angetrockneten Klebstoffschicht versehenen Wirkstoffoberfläche einen auf 120 bis 200° C erhitzten, flüssigen Kunststoff, z. B. ein weichmacherhaltiges Vinylchloridpolymerisat, im Spritzgußverfahren aufzubringen.

Mit den erfindungsgemäßen Produkten können zahlreiche Werkstoffe, wie Papier, Pappe, Holz, Metall und Leder mit hoher Festigkeit verklebt werden. Bevorzugt eignen sie sich zum Kleben von beliebigen Kunststoffen mit sich selbst oder mit anderen Materialien, insbesondere zum Kleben von weichmacherhaltigen Homo- oder Mischpolymerisaten des Vinylchlorids, vor allem zum Kleben von Sohlen aus diesen Materialien auf Schuhschäfte aus Leder oder Syntheseleder.

Die erfindungsgemäßen Produkte eignen sich im übrigen auch hervorragend als Beschichtungsmittel für die verschiedensten Substrate.

Die nachstehenden Beispiele dienen der weiteren Erläuterung der Erfindung.

**Beispiele**

**Herstellung der Polyesterpolyurethane**

Die in der nachstehenden Tabelle aufgelisteten Polyesterdiole (Spalte 1) und Diole (Spalte 2) werden gemischt und während 1 Stunde im Wasserstrahlvakuum bei 100° C entwässert.

Anschließend erfolgt bei 120° C die Zugabe der Polyisocanate (Spalte 3). Das Reaktionsgemisch wird ca. 2 Min. gerührt, wobei die Temperatur bis auf 140° C ansteigen kann. Die heiße Schmelze wird in TEFLON®-Schalen gegossen und anschließend bei 110° C während 15 h ausgeheizt.

Die Produkte weisen, 15 %-ig in Methylethylketon gelöst, eine Viskosität von 1000 bis 1200 mPas bei 23° C auf.

**Herstellung der Klebungen zur Ermittlung der Anfangsfestigkeit**

Als Material wird ein 4 mm dickes PVC-Material aus 70 Gewichtsteilen Polyvinylchlorid (K-Wert 80), 30 Gewichtsteilen Dioctylphthalat als Weichmacher sowie 5 Gewichtsteilen epoxidiertem Sojabohnenöl und 1,2 Gewichtsteilen Barium-Cadmium-laurat verwendet.

Vor dem Aufbringen der Klebstoffe (20 gew.-%ige Lösungen in Methylethylketon) werden die zu klebenden Oberflächen des auf Streifen von 15 cm Länge und 3 cm Breite geschnittenen Werkstoffes mit Schleifband der Körnung 40 gründlich gerauht und vom Schleifstaub befreit. Die dem Sohlenmaterial entsprechenden Streifen werden nach dem Klebstoffauftrag einen Tag bei Raumtemperatur offen gelagert und dann 4 Sek. durch Erhitzen auf 80°C im Funck-Aktiviergerät Typ A 1000 aktiviert. Die dem Obermaterial entsprechenden mit Klebstoff versehenen Streifen werden nicht aktiviert, sondern lediglich 30 Min. bei Raumtemperatur offen gelagert und dann sofort mit einem Streifen, der einen aktivierten Klebfilm trägt, gefügt und gepreßt. Alle aktivierten Klebfilme werden innerhalb 10 Sekunden nach der Entnahme aus dem Aktiviergerät zusammengefügt und die Klebungen 10 Sekunden bei 0,4 H/mm zugepreßt. Nach dem Pressen werden die Proben innerhalb von 1 Min. in eine Zugprüfmaschine eingespannt. Dann werden die beiden Enden mit einer Abzuggeschwindigkeit von 100 mm/Min. auseinandergezogen. Die ermittelten Ergebnisse für die Anfangsfestigkeit werden in der Tabelle, Spalte 4, wiedergegeben.

**Bestimmen der Kontaktklebzeit nach der Wärmeschockaktivierung**

Als Material wird ein handelsübliches, 4 mm dickes Gummimaterial aus Acrylnitril-Butadien-Kautschuk (Acrylnitrilgehalt 33 %, Defo-Härte 700 nach DIN 53514; mit einem Gehalt an Silikat-Füllstoff von etwa 31 % (Shore-Härte A des Gummimaterials 85 nach DIN 53505) verwendet.

Zur Prüfung werden Streifen von 4 cm Länge und 2 cm Breite eingesetzt. Die einem Sohlenmaterial entsprechen den Streifen werden nach dem Klebstoffauftrag einen Tag bei Raumtemperatur offen gelagert und dann 3 Sekunden im Funck-Aktiviergerät Typ A 1000 (70° C) aktiviert.

Die dem Obermaterial entsprechenden, mit Klebstoff versehenen Streifen werden nicht aktiviert, sondern lediglich 30 Min. bei Raumtemperatur offen gelagert und dann sofort mit einem Streifen, der einen aktivierten Klebfilm trägt, kreuzförmig übereinandergelegt und 5 Sek. mit einem Gewicht von 10 N belastet. Nach dem Pressen wird durch Auseinanderziehen der Streifen von Hand die Haftung der Klebfilme beurteilt. In Abständen von je 30 Sek. werden weitere Proben bis zu 10 Min. geprüft.

In der Tabelle (Spalte 5) sind die Ergebnisse bezüglich der Kontaktklebezeit aufgeführt. Die Beispiele I bis VII a beschreiben erfindungsgemäße Polyesterpolyurethane mit guten Anfangsfestigkeiten (Spalte 4) und guten Kontaktklebzeiten nach der Wärmeschockaktivierung (Spalte 5).

Die Beispiele VIII bis X zeigen, daß die Polyurethane auf Basis von Mischestern mit niedrigeren Molekulargewichten eine gute Kontaktklebzeit nach der Wärmeschockaktivierung, aber eine geringe Anfangsfestigkeit besitzen. Die Beispiele XI und XII zeigen, daß die Polyurethane auf Basis von Polyesterdiolen, in denen nur ein Diol als Diolkomponente eingebaut vorliegt, eine gute Anfangsfestigkeit, jedoch eine kurze Kontaktklebzeit nach der Wärmeschockaktivierung aufweisen.

**Legende**

Polyester

A Hydroxylpolyester aus Adipinsäure und einer Mischung von Butandiol-1,4 und Hexandiol-1,6 im molaren Verhältnis 7 : 3.
(MG 5000; Säurezahl 1.1).

B Hydroxylpolyester aus Adipinsäure und einer Mischung von Butandiol-1,4 und Hexandiol-1,6 im molaren Verhältnis 1 : 2.
(MG 4500; Säurezahl 1.0).

C Hydroxylpolyester aus Adipinsäure und einer Mischung von Butandiol-1,4 und Hexandiol-1,6 im molaren Verhältnis 4 : 6.
(MG 4500; Säurezahl 1.1).

D Hydroxylpolyester aus Adipinsäure und einer Mischung von Butandiol-1,4 und Hexandiol-1,6 im molaren Verhältnis 7 : 3.
(MG 3500; Säurezahl 1.0).

E Hydroxylpolyester aus Adipinsäure und einer Mischung aus Butandiol-1,4 und Hexandiol-1,6 im molaren Verhältnis 7 : 3.
(MG 2000; Säurezahl 0,9).

F Hydroxylpolyester aus Adipinsäure und einer Mischung aus Butandiol-1,4 und Hexandiol-1,6 im molaren Verhältnis 1 : 1.
(MG 2000; Säurezahl 1.1).

G Hydroxylpolyester aus Adipinsäure und Hexandiol
(MG 2250; Säurezahl 0,8).

H Hydroxylpolyester aus Adipinsäure und Hexandiol
(MG 4000; Säurezahl 0,9).

**Glykole**

M Butandiol-1,4
H Hexandiol-1,6
O 2,2-Bis(4-(2-hydroxylethoxy)-phenyl)-propan
P propoxiliertes 2,2-Bis-4-hydroxyphenylpropan OH-Zahl 200

Q $HO\text{-}(CH\text{-}CH_2\text{-}O)_m\text{-}CH_2\text{-}CH\text{-}CH_2\text{-}CH_2\text{-}(O\text{-}CH_2CH)_n\text{-}OH$
$\quad\quad | \quad\quad\quad\quad\quad\quad | \quad\quad\quad\quad\quad\quad\quad\quad |$
$\quad\quad CH_3 \quad\quad\quad\quad SO_3Na \quad\quad\quad\quad\quad CH_3$

$m + n \sim 4$, OH-Zahl 260

R Dimethylolpropionsäure

**Polyisocyanate**

X 4,4-Diisocyanatodiphenylmethan
Y Hexamethylendiisocyanat
Z Gemisch von 65 % 2,4 und 35 % 2,6-Toluylendiiso-cyanat.

**Tabelle**

| Beispiel | 1 Polyester | 2 Glykole | 3 Diisocyanat | 4 Anfangsfestigkeit N/mm | 5 Kontaktklebzeit Minuten |
|---|---|---|---|---|---|
| I. | 1 Mol A | 0,5 Mol M<br>0,5 Mol N | 1,99 Mol X | 2,1 | > 10 |
| II. | 1 Mol A | - | 0,995 Mol Y | 2,6 | > 10 |
| III. | 1 Mol A | 0,4 Mol O | 1,395 Mol Y | 2,3 | > 10 |
| IV. | 1 Mol A | 0,4 Mol P | 1,39 Mol Y | 2,2 | > 10 |
| V. | 1 Mol A | 0,4 Mol N<br>0,4 Mol O | 1,79 Mol Y | 2,7 | > 10 |
| VI. | 1 Mol A | 0,2 Mol Q<br>0,1 Mol R | 1,29 Mol Y | 2,1 | > 10 |
| VII. | 1 Mol B | - | 0,995 Mol X | 1,9 | > 10 |
| VII a. | 1 Mol C | - | 0,995 Mol X | 2,0 | > 10 |
| VIII. | 1 Mol D | - | 0,995 Mol Y | 0,9 | > 10 |
| IX. | 1 Mol E | - | 0,995 Mol Y | 0,6 | > 10 |
| X. | 1 Mol F | - | 0,995 Mol Z | 0,5 | > 10 |
| XI. | 1 Mol G | 0,4 Mol N | 1,39 Mol X | 2,3 | 1 |
| XII. | 1 Mol H | - | 0,995 Mol X | 2,5 | > 1 |

**Patentansprüche**

1. Weitgehend lineare, endständige Hydroxylgruppen aufweisende Polyesterpolyurethane, hergestellt durch Umsetzung von

a) Polyesterdiolen eines über 600 liegenden Molekulargewichts und gegebenenfalls

b) Diolen des Molekulargewichtsbereichs 62 bis 600 als Kettenverlägerungsmittel mit

c) organischen Diisocyanaten

unter Einhaltung eines Äquivalentverhältnisses von Hydroxylgruppen der Komponenten a) und b) zu Isocyanatgruppen der Komponente c) von 1 : 0,9 bis 1 : 0,999, dadurch gekennzeichnet, daß die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1 ,6-Dihydroxyhexan im Molverhältnis der Diole von 4 : 1 bis 1 : 4 besteht.

2. Polyesterpolyurethane gemäß Anspruch 1, dadurch gekennzeichnet, daß die Komponente a) zu 100 % aus einem Polyesterdiol des Molekulargewichtsbereichs 4000 bis 6000 besteht, bei deren Herstellung als Diolgemisch ein Gemisch aus 1 ,4-Dihydroxybutan und 1,6-Dihydroxyhexan im Molverhältnis von 7 : 3 bis 1 : 2 verwendet worden ist.

3. Polyesterpolyurethane gemäß Anspruch 1 und 2, dadurch gekennzeichnet, daß die Komponente c) aus 4,4'-Diisocyanatodiphenylmethan oder 1,6-Diisocyanatohexan besteht.

4. Polyesterpolyurethane gemäß Anspruch 1 bis 3, dadurch gekennzeichnet, daß bei ihrer Herstellung als Komponente b) Alkandiole, ausgewählt aus der Gruppe bestehend aus 1,2-Dihydroxyethan, 1,3-Dihydroxypropan, 1,4-Dihydroxybutan, 1,5-Dihydroxypentan, 1,6-Dihydroxyhexan und beliebigen Gemischen dieser Diole, in einer Menge von bis zu 200 Hydroxyläquivalentprozent, bezogen auf die Komponente a), mitverwendet worden sind.

5. Verwendung der Polyesterpolyurethane gemäß Anspruch 1 bis 5 als Klebstoff oder zur Herstellung von Klebstoffen zum Verkleben von Kunststoffen mit sich selbst und anderen Substraten.

**Claims**

1. Substantially linear polyester polyurethanes containing hydroxyl end groups, prepared by the reaction of

a) polyester diols having a molecular weight above 600 and optionally

b) diols in the molecular weight range of from 62 to 600 as chain lengthening agents with

c) organic diisocyanates

in proportions corresponding to an equivalent ratio of hydroxyl groups of components a) and b) to isocyanate groups of component c) in the range of from 1 : 0.9 to 1 : 0.999, characterised in that at least 80 % by weight of component a) consists of polyester diols in the molecular weight range of from 4000 to 6000 based on (i) adipic acid and (ii) mixtures of 1,4-dihydroxybutane and 1,6-dihydroxyhexane in a molar ratio of diols of from 4 : 1 to 1: 4.

2. Polyester polyurethanes according to Claim 1, characterised in that component a) consists to an extent of 100 % of a polyester diol in the molecular weight range of from 4000 to 6000 which has been prepared from a diol mixture consisting of a mixture of 1,4-dihydroxybutane and 1,6-dihydroxyhexane in a molar ratio of from 7 : 3 to 1 : 2.

3. Polyester polyurethanes according to Claims 1 and 2, characterised in that component c) consists of 4,4'-diisocyanatodiphenylmethane or 1,6-diisocyanatohexane.

4. Polyester polyurethanes according to Claims 1 to 3, characterised in that component b) used for their preparation included alkanediols selected from the group consisting of 1,2-dihydroxyethane, 1,3-dihydroxypropane, 1,4-dihydroxybutane, 1,5-dihydroxypentane, 1,6-dihydroxyhexane and any mixtures of these diols, used in a quantity of up to 200 hydroxyl equivalents percent, based on component a)

5. Use of the polyester polyurethanes according to Claims 1 to 5 as adhesive or for the preparation of adhesives for bonding synthetic resins to themselves and to other substrates.

**Revendications**

1. Polyester-polyuréthannes pratiquement entièrement linéaires, portant des groupes hydroxy terminaux, préparés par réaction de:

a) des polyester-diols de poids moléculaire supérieur à 600 et le cas échéant

b) des diols de poids moléculaire 62 à 600, servant d'agents d'allongement des chaînes; avec

c) des diisocyanates organiques,

à un rapport de 1 : 0,9 à 1 : 0,999 entre les équivalents des groupes hydroxy des composants a) et b) et les équivalents de groupes isocyanate du composant c), caractérisés en ce que le composant a) consiste pour au moins 80 % en poids en polyester-diols de poids moléculaire 4 000 à 6 000 à base de (i) l'acide adipique et (ii) des mélanges de 1,4-dihydroxybutane et de 1,6-dihydrohexane à un rapport molaire de 4 : 1 à 1 : 4 entre ces diols.

2. Polyester-polyuréthannes selon la revendication 1, caractérisés en ce que le composant a) consiste pour 100 % en un polyester-diol de poids moléculaire 4 000 à 6 000 à la préparation duquel on a utilisé en tant que mélange de diols un mélange du 1,4-dihydroxybutane et du 1,6-dihydroxyhexane à un rapport molaire de 7 : 3 à 1 : 2.

3. Polyester-polyuréthannes selon les revendications 1 et 2, caractérisés en ce que le composant c) consiste en 4,4'-diisocyanatodiphénylméthane ou 1,6-diisocyanatohexane.

4. Polyester-polyuréthannes selon les revendications 1 à 3, caractérisés en ce que l'on a utilisé conjointement en tant que composant b) pour leur préparation des alcane-diols choisis dans le groupe consistant en le 1,2-dihydroxyéthane, le 1,3-dihydroxypropane, le 1,4-dihydroxybutane, le 1,3-dihydroxypentane, le 1,6-dihydroxyhexane et les mélanges quelconques de ces diols, en quantité allant jusqu'à 200 équivalents de groupes hydroxy % par rapport au composant a).

5. Utilisation des polyester-polyuréthannes selon les revendications 1 à 5 en tant que colles ou pour la préparation de colles servant au collage de résines synthétiques sur elles-mêmes ou sur d'autres supports.